(19) Europäisches Patentamt
European Patent Office
Office européen des brevets

(11) EP 3 499 152 A1

(12) EUROPEAN PATENT APPLICATION

(43) Date of publication:
19.06.2019 Bulletin 2019/25

(51) Int Cl.:
F25B 41/06 (2006.01)      F25B 41/00 (2006.01)

(21) Application number: 18211603.8

(22) Date of filing: 11.12.2018

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 12.12.2017   JP 2017237376

(71) Applicant: MITSUBISHI HEAVY INDUSTRIES
THERMAL SYSTEMS, LTD.
108-8215 Tokyo (JP)

(72) Inventor: TAKAHASHI, Shinichi
Tokyo, 108-8215 (JP)

(74) Representative: Henkel, Breuer & Partner
Patentanwälte
Maximiliansplatz 21
80333 München (DE)

(54) **SOUND ABSORBING ELEMENT FOR REFRIGERATION CYCLE SYSTEM, DECOMPRESSION UNIT INCLUDING THE SAME, AND REFRIGERATION CYCLE SYSTEM**

(57)     There is provided a sound absorbing element that is provided in a refrigeration cycle system and through which a refrigerant flows, the sound absorbing element including: a flow path wall that partitions a flow path through which the refrigerant flows; and a sound absorbing wall that is disposed inside the flow path wall along a flowing direction of the refrigerant and forms gaps at different positions respectively in a circumferential direction of the flow path between the flow path wall and the sound absorbing wall. The sound absorbing wall is provided with a plurality of openings that communicate with the gaps from an inside of the sound absorbing wall.

FIG. 2

EP 3 499 152 A1

**Description**

BACKGROUND OF THE INVENTION

Field of the Invention

The present invention relates to a sound absorbing element provided in a refrigeration cycle system such as an air conditioner and a freezer, to a decompression unit including the sound absorbing element, and to a refrigeration cycle system.

Description of the Related Art

In a refrigeration cycle apparatus such as an air conditioner, noise occurs from various sound sources, for example, a compression mechanism, a motor, and pulsation of refrigerant.

In particular, in an expansion valve (a decompression unit), for example, when flow of a refrigerant containing a large bubble such as slag flow flows into the expansion valve, noise remarkably occurs due to drastic pressure variation caused by expansion, contraction, or vanishment of the bubble at a throttle part of the expansion valve. The refrigerant in gas-liquid two phases flows through the expansion valve. Therefore, the noise caused by the bubble easily occurs.

To reduce the noise generated from the expansion valve, it is proposed that a porous member is disposed in a conduit before and after the expansion valve (JP H7-146032 A). The porous member puts flow of the refrigerant into a flowing state where a gas phase and a liquid phase are mixed.

In addition, it is also proposed that a cylindrical turbulence generation member is provided in a conduit before the expansion valve in order to suppress generation of a periodical vortex in rear flow of the expansion valve (JP 2012-154529 A). The turbulence generation member includes a jagged protrusion narrowed inward at a rear end part, and generates turbulence in the flow of the refrigerant passing through the inside thereof. The turbulence generation member suppresses generation of the vortex by virtue of the turbulence state of the refrigerant, thereby suppressing self-excited vibration of a needle of the expansion valve.

When the porous member disclosed in JP H7-146032 A is used, the bubble is made finer to suppress pressure variation at the moment of destruction; however, the porous member imparts large resistance to the flow of the refrigerant. Therefore, pressure loss is large.

In contrast, in the turbulence generation member disclosed in JP 2012-154529 A, pressure loss is small as compared with the porous member; however, the turbulence generation member can generate turbulence in the flow of the refrigerant only near an inner wall of the conduit. Therefore, a large bubble may remain in the refrigerant, and pressure variation at the moment of destruction of the bubble may become large.

Further, the porous member disclosed in JP H7-146032 A and the turbulence generation member disclosed in JP 2012-154529 A are applicable to reduction of the noise related to the flow of the refrigerant in the gas-liquid two phases, but are not applicable to reduction of noise caused by the refrigerant in the other state, for example, by the refrigerant discharged from the compressor.

Accordingly, the present invention is directed to a sound absorbing element for a refrigeration cycle system that makes it possible to reduce noise by suppressing pressure variation of the refrigerant while suppressing pressure loss of the refrigerant irrespective of the state of the refrigerant, a decompression unit including the sound absorbing element, and a refrigeration cycle system.

SUMMARY OF THE INVENTION

According to the present invention, there is provided a sound absorbing element for a refrigeration cycle system, the sound absorbing element being provided in the refrigeration cycle system through which a refrigerant circulates, the refrigerant flowing through the sound absorbing element, and the sound absorbing element includes a flow path wall partitioning a flow path through which the refrigerant flows, and a sound absorbing wall that is disposed inside the flow path wall along a flowing direction of the refrigerant, and forms gaps at different positions in a circumferential direction of the flow path respectively between the flow path wall and the sound absorbing wall. The sound absorbing wall is provided with a plurality of openings that communicate with the gaps from an inside of the sound absorbing wall.

In the sound absorbing element according to the present invention, the sound absorbing wall preferably includes a plurality of pockets containing the gaps respectively, and the pockets each are preferably recessed inward from the flow path wall and provided with the plurality of openings.

In the sound absorbing element according to the present invention, the sound absorbing wall preferably has a ring-shaped cross-section and is inserted into the flow path wall, and the plurality of pockets are preferably arranged over an entire circumference of the flow path wall.

In the sound absorbing element according to the present invention, each of the plurality of pockets preferably includes a first region provided with an opening group including the plurality of openings, and a second region not provided with the opening group.

In the sound absorbing element according to the present invention, the pocket preferably includes the first region and the second region that form a substantially V shape in cross-section, and the first region of one of the pockets adjacent to each other in a circumferential direction of the flow path wall and the second region of the other pocket are preferably connected to each other.

The sound absorbing element according to the present invention preferably further includes a wall body that is disposed inside the sound absorbing wall along the flowing direction of the refrigerant. Second gaps are preferably formed between the sound absorbing wall and the wall body with respect to the pockets adjacent to one another in the circumferential direction of the flow path, and the wall body preferably is provided with openings communicating with the second gaps from a space existing further inside than the wall body.

The sound absorbing element according to the present invention preferably absorbs sound when Helmholtz resonance is established by the gaps and masses of air existing inside the openings.

Further, a decompression unit for a refrigeration cycle system according to the present invention includes a decompression action portion configured to reduce pressure of a refrigerant, an upstream portion through which the refrigerant flowing into the decompression action portion flows, and a downstream portion through which the refrigerant flowing out from the decompression action portion flows. At least one of the upstream portion and the downstream portion includes one of the above-described sound absorbing elements.

A refrigeration cycle system according to the present invention includes one of the above-described sound absorbing elements or the above-described decompression unit.

According to the present invention, it is possible to suppress pressure variation of the refrigerant to reduce noise while suppressing pressure loss of the refrigerant flowing through the sound absorbing element, by the sound absorbing action using the Helmholtz resonance established by the gaps that are provided between the flow path wall and the sound absorbing wall disposed along the flowing direction of the refrigerant and the masses of air existing inside the openings provided in the sound absorbing wall. According to the sound absorbing element of the present invention, it is possible to obtain the sound absorbing action even if the refrigerant contains a large bubble. Further, irrespective of presence of the bubble in the refrigerant, the sound absorbing element according to the present invention is applicable to a portion requiring reduction of the pressure variation of the refrigerant in the refrigeration cycle system.

BRIEF DESCRIPTION OF THE DRAWINGS

FIG. 1A is a schematic view illustrating a refrigeration cycle system according to a first embodiment of the present invention;

FIG. 1B is a diagram illustrating an expansion valve provided in the refrigeration cycle system illustrated in FIG. 1A, illustration of a sound absorbing wall being omitted in FIG.1B;

FIG. 1C is a partial enlarged view of FIG. 1B, illustration of the sound absorbing wall being omitted in FIG. 1C;

FIG. 2 is a diagram illustrating the expansion valve together with a sound absorbing element including the sound absorbing wall;

FIG. 3A is a schematic cross-sectional view of the sound absorbing element taken along a line IIIa-IIIa of FIG. 2;

FIG. 3B is a schematic perspective view illustrating the sound absorbing wall;

FIG. 4A is a schematic view illustrating an IVa part of FIG. 3A in an enlarged manner;

FIG. 4B is a schematic view to explain Helmholtz resonance;

FIG. 5A is a schematic cross-sectional view of a sound absorbing element according to a second embodiment of the present invention;

FIG. 5B is a schematic cross-sectional view illustrating the sound absorbing element illustrated in FIG. 5A in a developed manner;

FIG. 5C is a diagram illustrating relationship between a frequency and a sound pressure reduction effect;

FIGS. 6A to 6D are schematic development views each illustrating a modification of the sound absorbing element;

FIG. 7A is a schematic cross-sectional view illustrating a sound absorbing element according to a third embodiment of the present invention;

FIG. 7B is a schematic cross-sectional view illustrating the sound absorbing element illustrated in FIG. 7A in a developed manner;

FIG. 8A is a schematic cross-sectional view illustrating a sound absorbing element according to a modification of the third embodiment;

FIG. 8B is a schematic cross-sectional view illustrating the sound absorbing element illustrated in FIG. 8A in a developed manner; and

FIG. 9 is a schematic cross-sectional view illustrating a sound absorbing element according to a modification of the present invention.

DETAILED DESCRIPTION OF THE PREFERRED EMBODIMENTS

Some embodiments of the present invention are described below with reference to accompanying drawings.

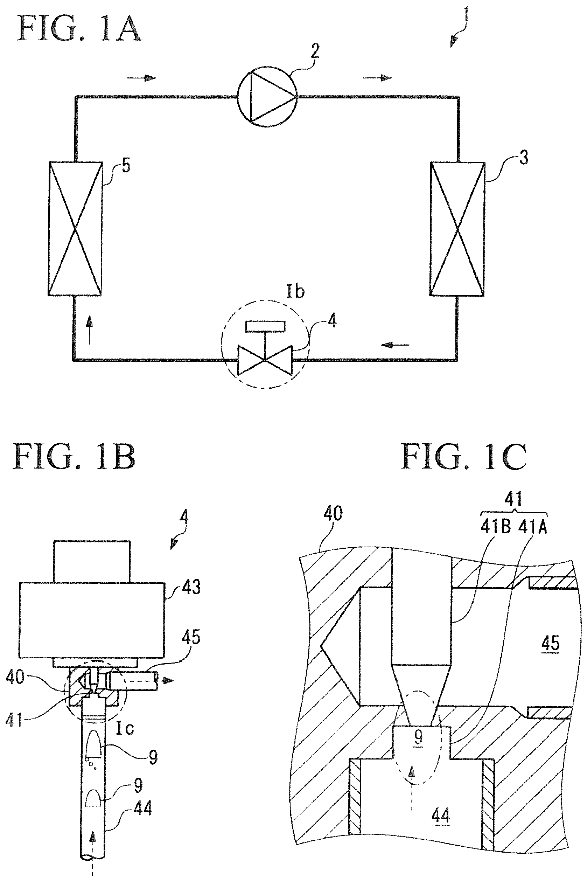

The embodiments described below disclose a sound absorbing element that is provided at a portion through which a refrigerant flows in a refrigeration cycle system 1 (FIG. 1A) and absorbs sound. Such a sound absorbing element is provided in, for example, an expansion valve 4 that serves as a decompression unit as a component of the refrigeration cycle system. Note that the sound absorbing element according to any of the embodiments is applicable to a capillary tube that also functions as the decompression unit.

The refrigeration cycle system 1 through which the refrigerant circulates is a system using a refrigeration cycle, for example, an air conditioner, a freezer, and a water heater.

As illustrated in FIG. 1A, the refrigeration cycle system 1 includes a compressor 2 that compresses the refrigerant, a first heat exchanger 3 that exchanges heat between the refrigerant and atmospheric air (a heat source), the expansion valve 4 that reduces pressure of the refrigerant, and a second heat exchanger 5 that exchanges heat between the refrigerant and a heat load. The compressor 2, the first heat exchanger 3, the expansion valve 4, and the second heat exchanger 5 are connected to one another by refrigerant pipes.

For example, in a case where the refrigeration cycle system 1 is an air conditioner and is operated for cooling, heat of the refrigerant compressed by the compressor 2 is released to atmospheric air by the first heat exchanger 3 as flow of the refrigerant illustrated by an arrow in FIG. 1A. Next, the pressure of the refrigerant is reduced by the expansion valve 4, and the refrigerant cools the heat load while evaporating in the second heat exchanger 5.

The expansion valve 4 according to the present embodiment is an electronic expansion valve, an opening degree of which is controlled based on variation of the heat load or the capacity of the compressor 2. As illustrated in FIGS. 1B and 1C, the expansion valve 4 includes an orifice 41A that is provided in a housing 40, a needle 41B that controls the opening degree by advancing or retreating with respect to the orifice 41A, and a motor 43 that drives the needle 41B to advance or retreat based on a control instruction corresponding to outlet temperature of the second heat exchanger 5.

In the expansion valve 4, the orifice 41A and the needle 41B that narrow down the flow of the refrigerant and reduce the pressure of the refrigerant correspond to a decompression action portion 41. An upstream pipe 44 (an upstream portion) through which the refrigerant flowing into the decompression action portion 41 flows and a downstream pipe 45 (a downstream portion) through which the refrigerant flowing out from the decompression action portion 41 flows are provided in the housing 40 of the expansion valve 4. Each of the members configuring the expansion valve 4 is made of an appropriate metal material such as an aluminum alloy or a copper alloy.

Note that each of the upstream portion and the downstream portion of the expansion valve 4 is not limited to the pipe shape in the present embodiment, and may be a hole provided in the housing 40.

The refrigerant passing through the first heat exchanger 3 flows into the expansion valve 4 from the upstream pipe 44, and then passes through the orifice 41A and is sprayed. As a result, a volume of the refrigerant drastically expands. The refrigerant flows through the downstream pipe 45 toward the second heat exchanger 5, and evaporates in the second heat exchanger 5 while absorbing heat from indoor air. Thereafter, the refrigerant is sucked into the compressor 2.

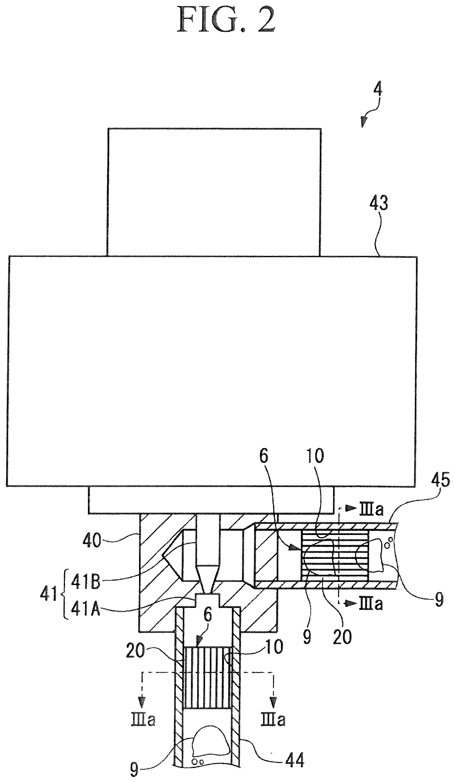

A refrigerant of gas-liquid two-phase flow may flow into the expansion valve 4. For example, as illustrated in FIGS. 1B and 1C, flow of the refrigerant containing a large bubble 9 like slag flow may flow into the expansion valve 4. To suppress pressure variation caused by expansion, contraction, or collapse of the bubble 9 to reduce noise when the bubble 9 passes through a narrow gap of the orifice 41A and the needle 41B, the expansion valve 4 includes a sound absorbing element 6 in each of the upstream pipe 44 and the downstream pipe 45 as illustrated in FIG. 2.

The pressure variation caused by the bubble contained in the refrigerant flowing through the expansion valve 4 is suppressed and sound is absorbed by the sound absorbing element 6. As a result, propagation of the pressure variation from the expansion valve 4 to the refrigerant pipes is prevented, which makes it possible to prevent radiation of noise from the refrigerant pipes or other members in the refrigeration cycle system 1. According to the embodiments each including the sound absorbing element 6 (or 7), it is possible to realize a quiet refrigeration cycle system 1.

A configuration and action effects of the sound absorbing element 6 will be described below.

[First Embodiment]

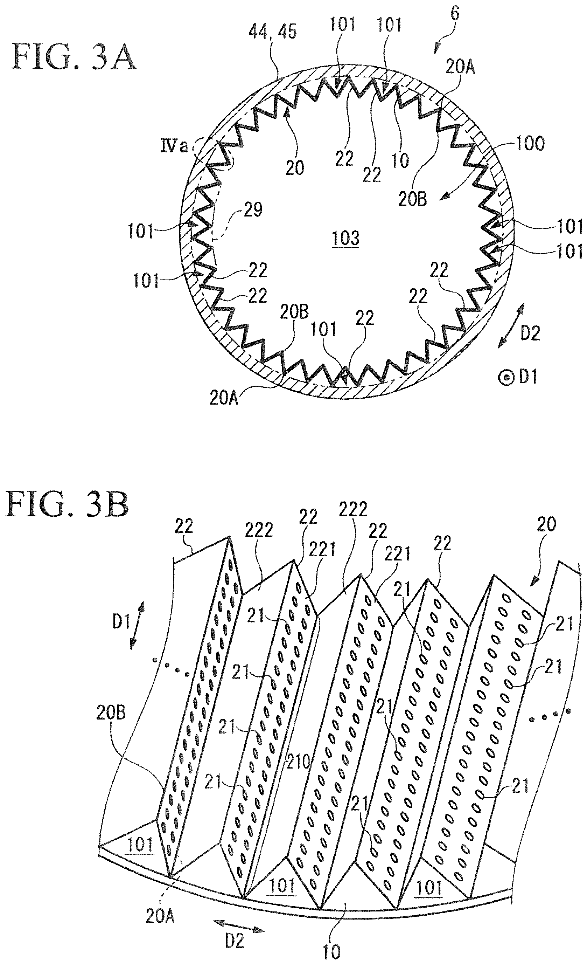

As illustrated in FIG. 2 and FIGS. 3A and 3B, the sound absorbing element 6 according to the first embodiment is provided in each of the upstream pipe 44 and the downstream pipe 45. The upstream pipe 44 and the downstream pipe 45 are each formed in a cylindrical shape.

A flow path wall 10 includes a predetermined range of the upstream pipe 44 or the downstream pipe 45 in a length direction.

In the present embodiment, to suppress propagation of sound from the expansion valve 4 that may become a noise source caused by the bubble 9 to the upstream and the downstream of the expansion valve 4 through the refrigerant pipes, the sound absorbing element 6 is provided in each of the upstream pipe 44 and the downstream pipe 45 as illustrated in FIG. 2.

In terms of a degree of quietness request or the like on the upstream and the downstream of the expansion valve 4, however, the sound absorbing element 6 may be provided in only one of the upstream pipe 44 and the downstream pipe 45.

The sound absorbing element 6 includes the flow path wall 10 that partitions a flow path 100 through which the refrigerant flows, and a sound absorbing wall 20 that is provided inside the flow path wall 10 and forms a plurality of gaps 101 between the sound absorbing wall 20 and the flow path wall 10. The sound absorbing wall 20 includes a large number of minute openings 21 (FIG. 3B). The openings 21 communicate with the gaps 101 from an inside (103) of the sound absorbing wall 20 and penetrate through the sound absorbing wall 20 in a thickness direction.

The sound absorbing element 6 absorbs sound through establishment of Helmholtz resonance by the gaps 101 and masses of air inside the openings 21 communicating with the gaps 101.

In the present embodiment, the flow path wall 10 is an inner wall in a part of the upstream pipe 44 or an inner wall in a part of the downstream pipe 45, and has a circular cross-section. The refrigerant flows through the flow path 100 formed inside the flow path wall 10 along an axis direction D1 of the flow path wall 10.

Note that, in a case where the upstream portion and the downstream portion of the expansion valve 4 are provided as the holes of the housing 40, an inner wall of each of the holes corresponds to the flow path wall 10.

The sound absorbing element 6 is not necessarily incorporated in the upstream pipe 44 or the downstream pipe 45 of the expansion valve 4 as with the present embodiment. In this case, the sound absorbing element 6 is provided in a member connected to the upstream pipe 44 or the downstream pipe 45 of the expansion valve 4 such as a member including a pipe or a flow path, and includes a flow path wall inside which the refrigerant flows, and the sound absorbing wall 20 disposed inside the flow path wall.

As illustrated in FIG. 3A, the sound absorbing wall 20 has a ring-shaped cross-section as a whole, and is inserted inside the flow path wall 10. The sound absorbing wall 20 is coaxial with the flow path wall 10.

The sound absorbing wall 20 is provided with a plurality of pockets 22 containing the gaps 101 respectively, and is formed in a triangular wave shape in which the pockets 22 are continuously arranged. Each of the pockets 22 is recessed inward from the flow path wall 10 (radially inward of flow path 100). The pockets 22 are arranged over the entire circumference of the flow path wall 10 as illustrated in FIG. 3A.

In the sound absorbing wall 20, by the plurality of pockets 22, the gaps 101 are formed at different positions respectively in a circumferential direction of the flow path 100. The sound absorbing wall 20 separates the gaps 101 located outside the sound absorbing wall 20 from the inside (an inner space 103) of the sound absorbing wall 20.

As described later, according to the present embodiment, even if large pressure variation is caused by expansion, contraction, or vanishment of the large bubble 9 contained in the flow of the refrigerant, the sound absorbing element 6 suppresses the pressure variation. In other words, the sound absorbing element 6 makes it possible to obtain sound absorbing action even if the large bubble 9 is contained in the refrigerant.

Therefore, it is unnecessary to use a porous member that allows the refrigerant to pass therethrough to make the bubble finer in order to suppress the pressure variation. This makes it possible to avoid use of the porous member that imparts large resistance to the flow of the refrigerant.

The sound absorbing wall 20 including the plurality of pockets 22 is disposed along the flowing direction (an axis direction D1) of the refrigerant flowing through the flow path 100. Pressure loss of the refrigerant by the sound absorbing wall 20 is small because a projected area when the sound absorbing wall 20 is projected along the axis direction D1 is small. Further, each of the openings 21 provided in the sound absorbing wall 20 is very small, and presence of the openings 21 hardly causes pressure loss of the refrigerant.

Further, the wide inner space 103 remains inside the sound absorbing wall 20 because the sound absorbing wall 20 is disposed near the flow path wall 10, and no member contacting the refrigerant is disposed in the inner space 103.

Accordingly, the sound absorbing element 6 makes it possible to suppress pressure variation of the refrigerant while suppressing pressure loss of the refrigerant.

Each of the pockets 22 according to the present embodiment includes a first region 221 and a second region 222 that form a substantially V-shaped cross-section. As illustrated in FIG. 3B, an opening group 210 including the large number of minute openings 21 is provided in the first region 221. The opening group 210 is not provided in the second region 222. The gap 101 closed by the second region 222 and the flow path wall 10 is present behind the opening group 210 provided in the first region 221. To secure the gap 101, it is preferable that the openings 21 are not provided in the second region 222.

The opening group 210 includes the openings 21 that are distributed over the substantially entire region of the first region 221. Each of the openings 21 is, for example, a circular through hole. A predetermined opening ratio is provided to the first region 221. The opening ratio corresponds to a ratio of a total area of all of the openings 21 configuring the opening group 210 to the area of the first region 221.

As illustrated in FIG. 3B, the first region 221 of one of the pockets 22 and 22 adjacent to each other in the circumferential direction D2 of the flow path wall 10 and the second region 222 of the other pocket 22 are connected to each other. In other words, in the circumferential direction D2, the first regions 221 provided with the opening group 210 and the second regions 222 not provided with the opening group 210 are alternately disposed.

The sound absorbing wall 20 according to the present embodiment is configured in a form in which the plurality of pockets 22 each having the V-shaped cross-section are continuously arranged in the circumferential direction D2. The form is obtained in such a manner that the opening groups 210 are formed in a plate member made of a metal material by stamping, the plate member is repeatedly small folded in a folding screen shape, and the plate member is further wholly bent in a cylindrical shape in a direction intersecting the folding line.

In the sound absorbing wall 20, ridges 20A each protruding outward (radially outward) toward the flow path wall 10 and valleys 20B each recessed inward from the respective ridges 20A are alternately disposed in the circumferential direction D2. A region from the ridge 20A to adjacent ridge 20A through the valley 20B corresponds to one pocket 22.

The sound absorbing wall 20 is not necessarily made of one plate member, and can be made of a plurality of plate members. For example, the sound absorbing wall 20 may be divided into two parts in the circumferential direction D2, and may be made of two circular arc-shaped members each corresponding to half of the circumference.

The sound absorbing wall 20 is integrated with the flow path wall 10 (an inner wall of the upstream pipe 44 or the downstream pipe 45 in the present embodiment) by an appropriate method. For example, when the sound absorbing wall 20 in the folding screen shape that has an outer diameter slightly larger than the diameter of the flow path wall 10 is inserted inside the flow path wall 10 while being compressed inward, the ridges 20A of the sound absorbing wall 20 are pressed against the flow path wall 10 and are fixed. Alternatively, the sound absorbing wall 20 may be assembled to the flow path wall 10 by an appropriate method such as welding, brazing, and screwing.

Note that, in the state where the sound absorbing wall 20 is assembled to the flow path wall 10, the ridges 20A of the sound absorbing wall 20 are not necessarily in contact with the flow path wall 10, and a slight gap may be provided between the sound absorbing wall 20 and the flow path wall 10.

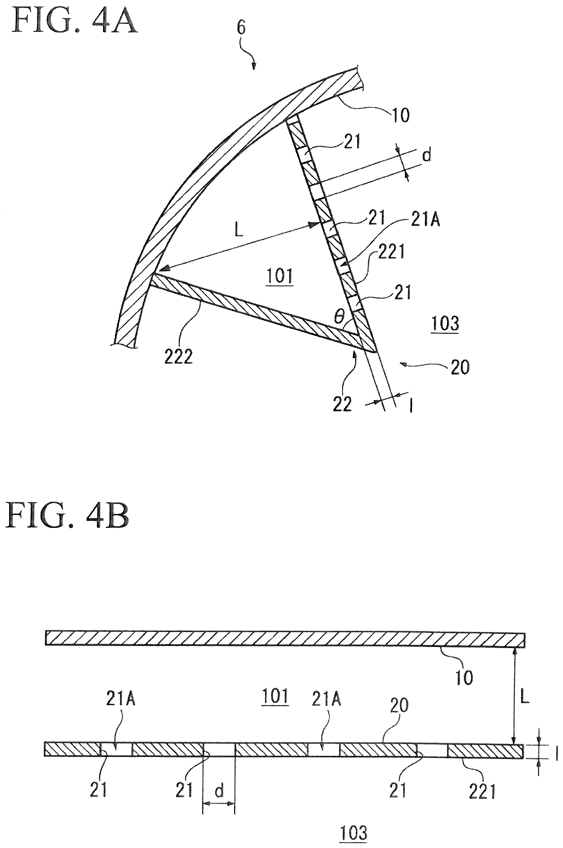

The action by the sound absorbing element 6 is described with reference to FIGS. 4A and 4B.

FIG. 4A schematically illustrates one pocket 22 of the sound absorbing wall 20 and the flow path wall 10 corresponding to the pocket 22.

As described above, the openings 21 that communicate with the corresponding gap 101 from the inner space 103 are provided in the first region 221 of the pocket 22. The gap 101 is present behind the openings 21. The sound absorbing element 6 having such a structure makes it possible to absorb sound with Helmholtz resonance at a predetermined frequency based on a size of each of the openings 21, a thickness of the first region 221, and a thickness of the gap 101 existing behind the openings 21.

The Helmholtz resonance indicates that masses of air 21A (air columns) existing inside the respective openings 21 communicating with the gap 101 resonate at a certain frequency with surrounding air when the masses of air 21A move in a hole axis direction. At this time, the gap 101 could be regarded as a spring provided in the masses of air 21A. When the masses of air 21A vibrate in resonance state, friction between the air and an inner peripheral part of each of the openings 21 and friction between molecules of composition gas of the air, remarkably occur, which attenuates vibration energy and reduces sound pressure (sound absorption).

In other words, even if the gas-liquid two-phase flow such as slag flow flows into the expansion valve 4 and the pressure variation at a predetermined frequency occurs by destruction of the bubble 9, it is possible to suppress the pressure variation and also to prevent propagation of the sound generated from the expansion valve 4 to the periphery.

FIG. 4B is a model diagram to explain the Helmholtz resonance. The sound absorbing element 6 makes it possible to form a Helmholtz resonance type passive sound absorbing structure.

The Helmholtz resonance is expressed by, for example, the following expression (1),

[Expression 1]

$$f_0 = \frac{c}{2\pi} \sqrt{\frac{1}{\phantom{()}}} \qquad \cdots \quad (1)$$

where $f_0$ is a resonance frequency, C is a sonic speed, P is an opening ratio, 1 is a plate thickness, d is a hole diameter, and L is a thickness of a rear air layer. The hole diameter d of each of the openings 21 is an equivalent diameter. In other words, in a case where each of the openings 21 has a shape other than a circular shape, for example, a rectangular shape, a diameter of a circle having an area equal to the area of the rectangular opening 21 is applied.

The plate thickness 1 of the sound absorbing wall 20, the hole diameter d of each of the openings 21, and the thickness L of the gap 101 are determined so as to be matched with the predetermined frequency $f_0$ at which the pressure variation is to be reduced and to satisfy the expression (1).

The sound absorption by the Helmholtz resonance is premised on that an internal volume dl of each of the openings 21 is negligibly small as compared with a volume V of the gap 101. The hole diameter d of each of the openings 21 is, for example, about 0.15 mm, and the plate thickness 1 is, for example, about 1.5 mm, though they depends on the frequency $f_0$ at which the pressure variation is to be reduced.

Since the first region 221 and the second region 222 of the pocket 22 according to the present embodiment are not parallel to each other, the thickness L of the gap 101 illustrated in FIG. 4A is not constant. Even in this case, a representative value of the thickness L of the gap 101 is determined based on the predetermined frequency fo, which makes it possible to reduce the pressure variation at a frequency band including the predetermined frequency $f_0$.

For example, in a case where the resonance frequency $f_0$ is tuned to about 4 kHz that is a frequency at which sound caused by the refrigerant easily occurs, it is preferably determined as follows.

| C: | sonic speed | 200 m/s |
| P: | opening ratio | 0.05 |
| 1: | plate thickness | 1 mm |
| d: | hole diameter | 1 mm |
| L: | thickness of rear air layer | 2 mm |

The sound absorbing action by the above-described Helmholtz resonance is obtainable for each of the openings 21 distributed in the first regions 221. Therefore, it is possible to sufficiently suppress the pressure variation and to reduce noise caused by the refrigerant.

When the pockets 22 are disposed over the entire circumference of the sound absorbing element 6 as with the present embodiment, it is possible to achieve sound absorption over the entire circumference. Even in a case where the pockets 22 are not provided at a part in the circumferential direction D2 of the sound absorbing wall 20 having the ring-shaped cross-section, the sound absorbing action is also obtained over a range where the pockets 22 are provided. Therefore, the configuration is also available.

To form the large number of openings 21 to set the appropriate opening rate P, the area of the first regions 221 of the sound absorbing wall 20 is preferably largely secured.

In the present embodiment, the sound absorbing wall 20 is folded in the folding screen shape in the circumferential direction D2, and the openings 21 are provided only in the first regions 221 out of the first regions 221 and the second regions 222 that are alternately disposed in the circumferential direction D2.

This configuration makes it possible to more sufficiently obtain the sound absorbing effect while securing the gaps 101 behind the openings 21 and largely securing a region where the openings 21 can be formed as a whole in the circumferential direction D2, equivalently to or more equivalently than a case where a porous cylinder 29 (a part thereof is illustrated by alternate long and two short dash line in FIG. 3A) is used, the porous cylinder having a simple annular cross-section without pockets and having a large number of uniformly-distributed holes. To secure a large region where the openings 21 can be formed, a folding angle θ (FIG. 4A) of the sound absorbing wall 20 is desirably set to 60 degrees or less.

According to the present embodiment described above, since the expansion valve 4 includes the sound absorbing element 6, it is possible to suppress the pressure loss of the refrigerant flowing through the expansion valve 4, and it is also possible to sufficiently suppress noise from the expansion valve 4 caused by the refrigerant, by high sound absorbing action using the Helmholtz resonance. Adjusting the plate thickness 1 of the sound absorbing wall 20, the hole diameter d of each of the openings 21, the opening ratio P of the openings 21, and the thickness L of each of the gaps 101 makes it possible to reduce the pressure variation in the desired frequency band.

The sound absorbing element 6 is applicable to, for example, a discharge pipe or a muffler of the compressor 2 without being limited to the expansion valve 4 or the capillary tube through which the refrigerant of the gas-liquid two-phase flow that may contain the large bubble 9 flows. For example, to suppress the pressure variation (pulsation) of the refrigerant compressed by the compressor 2, the sound absorbing element 6 may be provided in a discharge pipe that discharges the compressed refrigerant.

In other words, in the present embodiment, the sound absorbing element 6 is disposed at a position requiring suppression of pressure variation to absorb sound, irrespective of the state of the refrigerant that is changed while flowing through the refrigeration cycle system 1.

The flow path 100 of the refrigerant to which the sound absorbing element 6 is applied may have a ring-shaped cross-section like an outlet flow path of the muffler provided around a shaft of the compressor 2, without being limited to the circular cross-section. Also in this case, the sound absorbing wall 20 in which the opening groups 210 are provided in the pockets 22 is disposed in a ring-shaped flow path 100 between an outer peripheral part of the shaft and an inner peripheral part of the muffler, which makes it possible to configure the sound absorbing element 6 including an outlet part of the muffler and the sound absorbing wall 20.

[Second Embodiment]

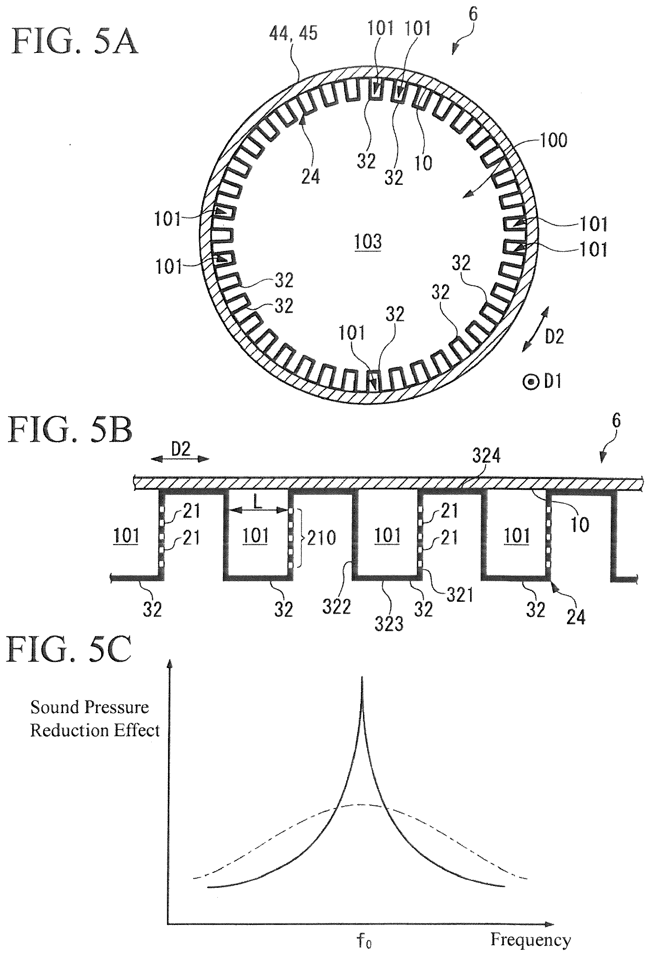

Next, a second embodiment (FIGS. 5A to 5C) of the present invention will be described. In and after the second embodiment, matters different from the first embodiment are mainly described. Components similar to those in the first embodiment are denoted by the same reference numerals.

As illustrated in FIG. 5A, the sound absorbing element 6 according to the second embodiment includes the flow path wall 10 and a sound absorbing wall 24 that is disposed inside the flow path wall 10 and includes a plurality of pockets 32 each containing the gap 101 between the flow path wall 10 and the sound absorbing wall 24.

The sound absorbing element 6 including the flow path wall 10 and the sound absorbing wall 24 according to the second embodiment is also provided in at least one of the upstream pipe 44 and the downstream pipe 45 illustrated in FIG. 2.

The sound absorbing wall 24 is configured in a form in which the plurality of pockets 32 each having a substantially U-shaped cross-section are continuously arranged in the circumferential direction D2. The form is obtained by folding a plate member made of a metal material in a rectangular wave shape. The sound absorbing wall 24 as a whole including the pockets 32 is also disposed along the flowing direction of the refrigerant flowing through the flow path 100 (the axis direction D1).

As illustrated in FIG. 5B, each of the pockets 32 includes a first region 321 and a second region 322 that are disposed substantially parallel to each other, and a third region 323 that couples an inner end of the first region 321 and an inner end of the second region 322. A coupling part 324 is interposed between the pockets 32 and 32 adjacent to each other. The coupling part 324 is disposed on the flow path wall 10.

Among the regions 321 to 324, the opening group 210 is provided only in the first region 321, and the opening group 210 is not provided in the other regions 322 to 324.

The gap 101 that is closed by the second region 322, the third region 323, and the flow path wall 10 is formed behind the openings 21 of the first region 321.

The first region 321 of one of the pockets 32 and 32 adjacent to each other in the circumferential direction D2 and the second region 322 of the other pocket 32 are connected to each other through the coupling part 324.

To sufficiently secure an area of the first region 321 where the openings 21 are provided, a dimension (the heights of the first region 321 and second region 322) of each of the pockets 32 in the radial direction of the flow path wall 10 is preferably larger than a dimension (the width of the third region 323) of each of the pocket 32 in the circumferential direction D2.

In the example illustrated in FIGS. 5A and 5B, a ratio of the width of a higher region and the width of a lower region in the rectangular wave of the sound absorbing wall 24 is substantially 1:1; however, the ratio is not limited thereto. When the width of the lower region (a part separated from flow path wall 10) in the rectangular wave is made larger than the width of the higher region (a part close to flow path wall 10), it is possible to enhance a utilization rate of a space near the flow path wall 10 for the gap 101, and to accordingly improve the sound absorbing effect.

Also according to the second embodiment, as with the first embodiment, the sound absorbing element 6 including the sound absorbing wall 24 makes it possible to suppress the pressure variation at the predetermined frequency to reduce noise by the sound absorbing action using the Helmholtz resonance that is obtained from the masses of air in the openings 21 of the sound absorbing wall 24 and the gap 101 behind the openings 21 while suppressing the pressure loss of the refrigerant, irrespective of the state of the refrigerant.

In the second embodiment, the first region 321 and the second region 322 of each of the pockets 32 are disposed parallel to each other. Therefore, unlike the first embodiment, the thickness L of each of the gaps 101 behind the openings 21 is constant. Accordingly, as illustrated by a solid line in FIG. 5C, it is possible to obtain a sound pressure reduction effect prominently at a predetermined frequency $f_0$. In the case where the thickness L is not constant as with the first embodiment, it is possible to obtain the sound pressure reduction effect over the before and after the target frequency $f_0$ as illustrated by an alternate long and short dash line in FIG. 5C.

In addition to the first region 321, the opening group 210 may be provided in the third region 323. This also makes it possible to obtain the sound absorbing action because two or more wall surfaces (regions) are present behind the openings 21. More specifically, the second region 322 and the flow path wall 10 are present behind the openings 21 when the gap 101 is viewed from the openings 21 in the first region 321, and the second region 322 and the flow path wall 10 are also present behind the openings 21 when the gap 101 is viewed from the openings 21 in the third region 323.

[Modifications of Sound Absorbing Wall]

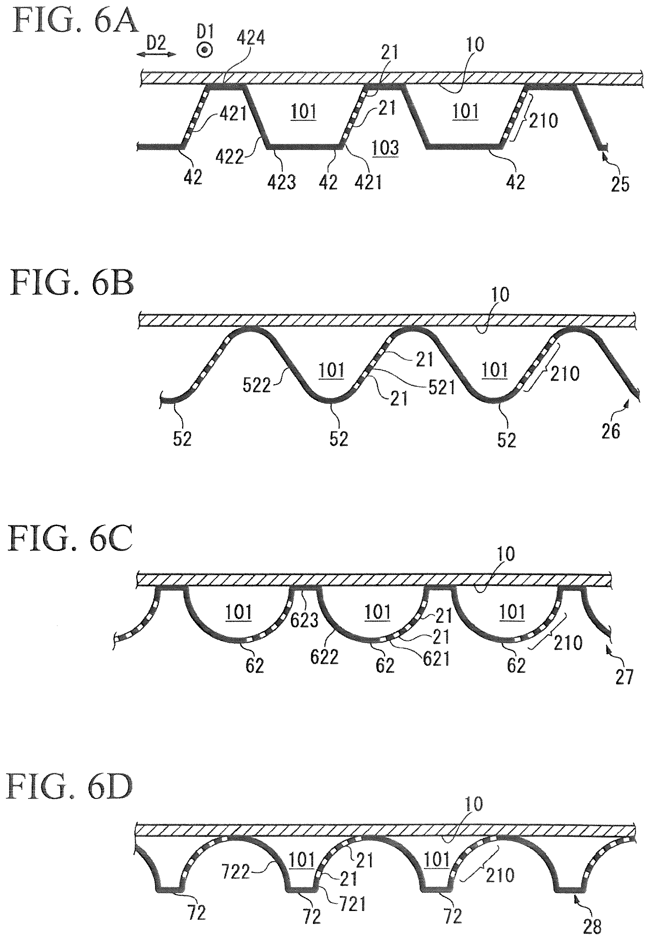

As the sound absorbing wall of the sound absorbing element 6 according to the present invention, for example, various forms as illustrated in FIGS. 6A to 6D may be adopted in addition to the sound absorbing wall 20 according to the first embodiment and the sound absorbing wall 24 according to the second embodiment.

Each of the sound absorbing walls illustrated in FIGS. 6A to 6D is also configured in the form in which a plurality of pockets are continuously arranged in the circumferential direction D2, the form being obtained by bending a plate member made of a metal material. Further, any of the sound absorbing walls, as a whole including the pockets, is disposed along the flowing direction (the axis direction D1) of the refrigerant flowing through the flow path 100.

The sound absorbing wall 25 illustrated in FIG. 6A is configured in a form having a trapezoidal wave-shaped cross-section, and includes a plurality of pockets 42 each including the gap 101 between the sound absorbing wall 25 and the flow path wall 10.

Each of the pockets 42 includes a first region 421 and a second region 422 that correspond to oblique sides of a trapezoid respectively, and a third region 423 that couples an inner end of the first region 421 and an inner end of the second region 422. The opening group 210 is provided only in the first region 421. The first region 421 of one of the pockets 42 and 42 adjacent to each other in the circumferential direction D2 and the second region 422 of the other pocket 42 are connected to each other through a coupling part 424.

A sound absorbing wall 26 illustrated in FIG. 6B is configured in a form in which pockets 52 each having a substantially V-shaped cross-section are continuously arranged in the circumferential direction D2, the form being obtained by bending the plate member in a sine wave shape.

Each of the pockets 52 includes a first region 521 that is located on one side in the circumferential direction D2 and a second region 522 that is located on the other side, and the opening group 210 is provided only in the first region 521. The first region 521 of one of the pockets 52 and 52 adjacent to each other in the circumferential direction D2 and the second region 522 of the other pocket 52 are connected to each other.

A sound absorbing wall 27 illustrated in FIG. 6C is configured in a form in which pockets 62 each having a circular arc-shaped cross-section are continuously arranged in the circumferential direction D2.

Each of the pockets 62 includes a first region 621 that is located on one side in the circumferential direction D2 and a second region 622 that is located on the other side, and the opening group 210 is provided only in the first region 621. The first region 621 of one of the pockets 62 and 62 adjacent to each other in the circumferential direction D2 and the second region 622 of the other pocket 62 are connected to each other through a coupling part 623. Note that the sound absorbing wall 27 may be configured in a form in which the first region 621 of one of the pockets 62 adjacent to each other and the second region 622 of the other pocket 62 are directly connected to each other without interposition of the coupling part 623.

A sound absorbing wall 28 illustrated in FIG. 6D is configured in a form that is obtained by reversing the sound absorbing wall 27 illustrated in FIG. 6C in the radial direction, where pockets 72 each having a substantially V-shaped cross-section are continuously arranged in the circumferential direction D2.

Each of the pockets 72 includes a first region 721 provided with the opening group 210 and a second region 722 not provided with the opening group 210.

The sound absorbing element 6 including any of the sound absorbing walls (25 to 28) respectively illustrated in FIGS. 6A to 6D makes it possible to suppress the pressure variation caused in the refrigerant flowing through the flow path 100 and to reduce the noise by the sound absorbing action using the Helmholtz resonance established by the masses of air existing inside the openings 21 and the gap 101 existing behind the openings 21.

[Third Embodiment]

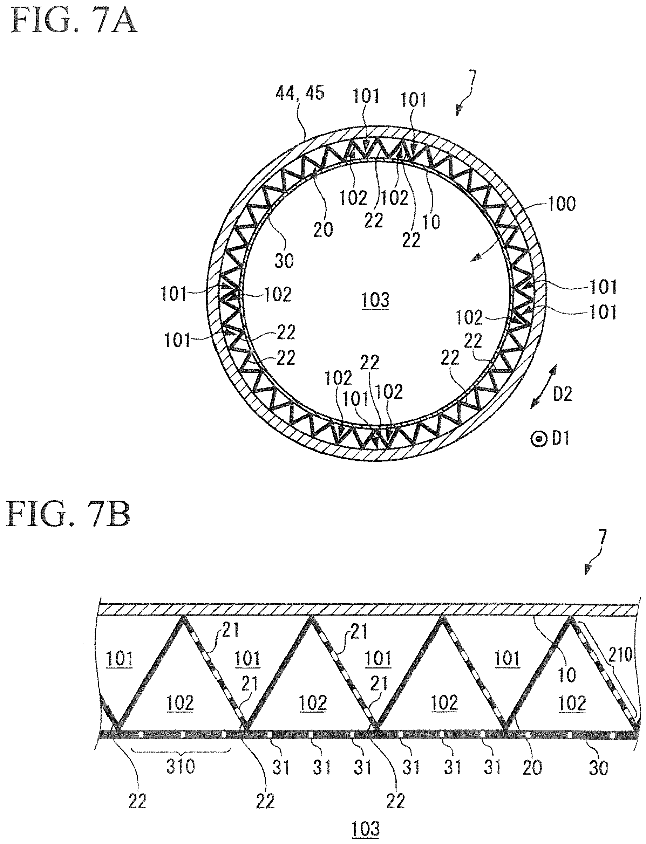

Next, a third embodiment (FIGS. 7A and 7B) according to the present invention is described.

As illustrated in FIG. 7A, a sound absorbing element 7 according to the third embodiment includes, in addition to the flow path wall 10 and the sound absorbing wall 20, a wall body 30 that is disposed inside the sound absorbing wall 20.

Note that the sound absorbing element 7 may include the sound absorbing wall 24 according to the second embodiment or any of the sound absorbing walls 25 to 28 according to the modifications, in place of the sound absorbing wall 20.

The wall body 30 has an annular cross-section, and is disposed inside the sound absorbing wall 20 along the flowing direction (the axis direction D1) of the refrigerant. The wall body 30 and the flow path wall 10 are coaxially disposed.

When the wall body 30 is disposed along an inner end of the sound absorbing wall 20, second gaps 102 are formed between the wall body 30 and the sound absorbing wall 20 with respect to the pockets 22 adjacent to one another in the circumferential direction D2.

The wall body 30 can be assembled to the sound absorbing wall 20 and the flow path wall 10 by welding, brazing, screwing, or other appropriate method. For example, the sound absorbing wall 20 is inserted between the flow path wall 10 and the wall body 30 in a state of being compressed in the radial direction, which makes it possible to assemble the flow path wall 10, the sound absorbing wall 20, and the wall body 30.

As illustrated in FIG. 7B that illustrates the sound absorbing element 7 developed in the circumferential direction D2, the wall body 30 is provided with a large number of openings 31 that penetrate through the wall body 30 in a thickness direction. The openings 31 communicate with the second gaps 102 from the space 103 existing further inside the wall body 30. Opening groups 310 each including the lager number of openings 31 are distributed in the wall body 30.

The second gaps 102 are present behind the opening groups 310. A hole diameter d of each of the openings 31, a plate thickness 1 of the wall body 30, an area opening ratio P of the openings 31 in the wall body 30, and a thickness of each of the second gaps 102 are adjusted so as to be matched with a predetermined frequency $f_0$ at which the pressure variation of the refrigerant occurs, based on the above-described expression (1).

The sound absorbing element 7 makes it possible to obtain the sound absorbing action using the Helmholtz resonance established by the masses of air existing inside the openings 21 and the gaps 101, and also to obtain the sound absorbing action using the Helmholtz resonance established by the masses of air existing inside the openings 31 and the second gaps 102. The wall body 30 that is disposed inside the sound absorbing wall 20 along the flowing direction of the refrigerant and the minute openings 31 of the wall body 30 hardly cause pressure loss of the refrigerant. Therefore, according to the third embodiment, it is possible to sufficiently suppress the pressure variation of the refrigerant by the sound absorbing effect using the gaps 101 and 102 densely disposed over the entire circumference near the flow path wall 10 while suppressing the pressure loss of the refrigerant.

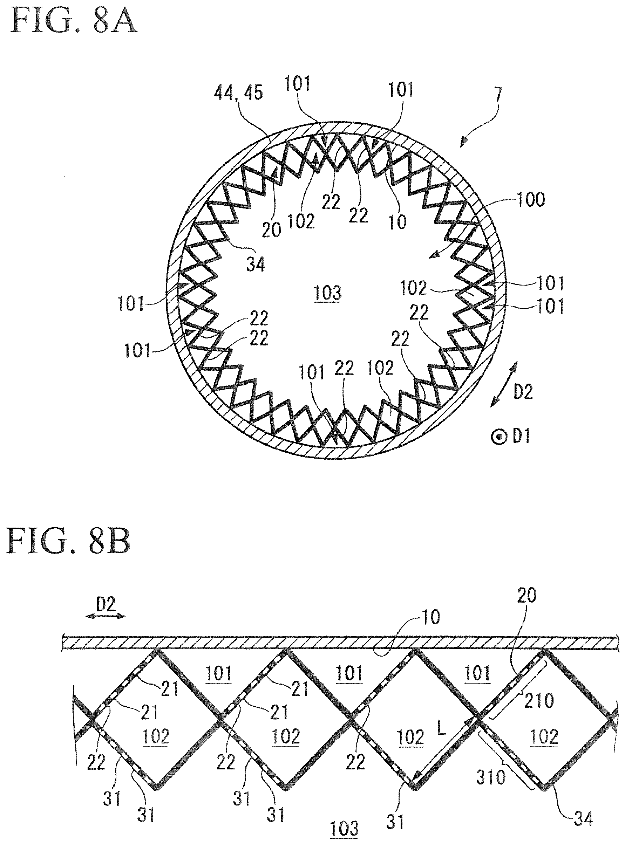

In an example illustrated in FIGS. 8A and 8B, a wall body 34 disposed inside the sound absorbing wall 20 is formed in a triangular wave shape similar to the sound absorbing wall 20.

As illustrated in FIG. 8B, the sound absorbing wall 20 and the wall body 34 are disposed while being shifted to each other in phase by a predetermined angle (here, 180 degrees) in the circumferential direction D2. The gaps 102 each having a square-shaped cross-section are formed between the sound absorbing wall 20 and the wall body 34. The opening groups 310 that communicate with the gaps 102 are provided in the wall body 34. The thickness L of each of the gaps 102 behind the openings 31 is constant.

To sufficiently obtain the sound absorbing action, a hole axis of each of the openings 31 and a hole axis of each of the openings 21 are preferably orthogonal to each other rather than parallel to each other.

The sound absorbing element 7 illustrated in FIGS. 8A and 8B makes it possible to suppress the pressure variation of the refrigerant to reduce noise by the Helmholtz resonance structure configured in two stages by the two members (the sound absorbing wall 20 and the wall body 34) disposed inside the flow path wall 10, while suppressing the pressure loss of the refrigerant, as with the third embodiment (FIGS. 7A and 7B).

Note that the sound absorbing wall 20 and the wall body 34 do not necessarily have the similar forms to each other, and a wall body having, for example, a sine wave-shaped cross-section or a trapezoidal wave-shaped cross-section may be combined in place of the wall body 34.

In addition, the sound absorbing wall having an appropriate form and an appropriate wall body may be combined, so that the first gaps 101 between the flow path wall 10 and the sound absorbing wall and the second gaps 102 between the sound absorbing wall and the wall body are used to achieve sound absorption.

Other than the above, the configurations described in the above-described embodiments may be selected or appropriately modified without departing from the scope of the present invention.

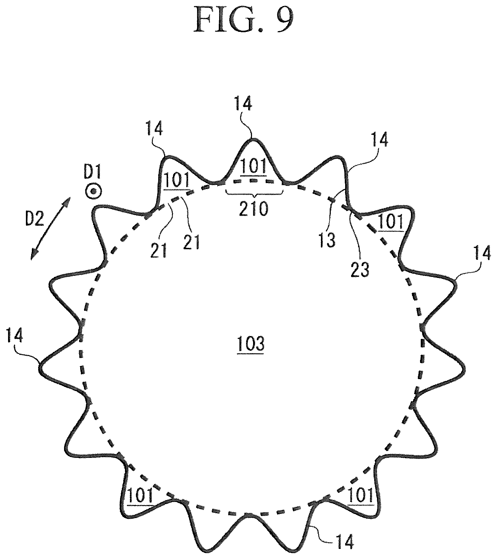

As illustrated in FIG. 9, the sound absorbing element according to the present invention may include a sound absorbing wall 23 having an annular cross-section and a flow path wall 13. The flow path wall 13 includes a plurality of pockets 14 each protruding outward from the sound absorbing wall 23 side. The pockets 14 arranged in the circumferential direction D2 contain the gaps 101 respectively. Further, the sound absorbing wall 23 is provided with the opening groups 210 each including the large number of openings 21 communicating with the gap 101.

Even if the sound absorbing wall 23 has a simple annular shape, the configuration illustrated in FIG. 9 forms the plurality of gaps 101 at different positions in the circumferential direction D2 with use of the shape of the flow path wall 13, thereby achieving sound absorption by the Helmholtz resonance established by the air columns existing inside the openings of the sound absorbing wall 23 and the gaps 101.

**Claims**

1.  A sound absorbing element for a refrigeration cycle system, the sound absorbing element being provided in the refrigeration cycle system through which a refrigerant circulates, the refrigerant flowing through the sound absorbing element, and the sound absorbing element including:

    a flow path wall partitioning a flow path through which the refrigerant flows; and
    a sound absorbing wall that is disposed inside the flow path wall along a flowing direction of the refrigerant, and forms gaps at different positions in a circumferential direction of the flow path respectively between the flow path wall and the sound absorbing wall, wherein
the sound absorbing wall is provided with a plurality of openings that communicate with the gaps from an inside of the sound absorbing wall.

2. The sound absorbing element for the refrigeration cycle system according to claim 1, wherein
the sound absorbing wall includes a plurality of pockets containing the gaps respectively, and
the pockets each are recessed inward from the flow path wall and provided with the plurality of openings.

3. The sound absorbing element for the refrigeration cycle system according to claim 2, wherein
the sound absorbing wall has a ring-shaped cross-section and is inserted into the flow path wall, and
the plurality of pockets are arranged over an entire circumference of the flow path wall.

4. The sound absorbing element for the refrigeration cycle system according to claim 2 or 3, wherein each of the plurality of pockets includes a first region provided with an opening group including the plurality of openings, and a second region not provided with the opening group.

5. The sound absorbing element for the refrigeration cycle system according to claim 4, wherein
the pocket includes the first region and the second region that form a substantially V shape in cross-section, and
the first region of one of the pockets adjacent to each other in a circumferential direction of the flow path wall and the second region of the other pocket are connected to each other.

6. The sound absorbing element according to any one of claims 2 to 5, further comprising a wall body that is disposed inside the sound absorbing wall along the flowing direction of the refrigerant, wherein
second gaps are formed between the sound absorbing wall and the wall body with respect to the pockets adjacent to one another in the circumferential direction of the flow path, and
the wall body is provided with openings communicating with the second gaps from a space existing further inside than the wall body.

7. The sound absorbing element for the refrigeration cycle system according to any one of claims 1 to 6, wherein sound is absorbed when Helmholtz resonance is established by the gaps and masses of air existing inside the openings.

8. A decompression unit for a refrigeration cycle system, including:

   a decompression action portion configured to reduce pressure of a refrigerant;
   an upstream portion through which the refrigerant flowing into the decompression action portion flows; and
   a downstream portion through which the refrigerant flowing out from the decompression action portion flows, wherein
   at least one of the upstream portion and the downstream portion includes the sound absorbing element according to any one of claims 1 to 7.

9. A refrigeration cycle system comprising the sound absorbing element according to any one of claims 1 to 7 or the decompression unit according to claim 8.

# FIG. 1A

# FIG. 1B

# FIG. 1C

# FIG. 2

FIG. 3A

FIG. 3B

FIG. 4A

FIG. 4B

FIG. 5A

FIG. 5B

FIG. 5C

FIG. 6A

FIG. 6B

FIG. 6C

FIG. 6D

EP 3 499 152 A1

FIG. 7A

FIG. 7B

18

## FIG. 8A

## FIG. 8B

# FIG. 9

Europäisches Patentamt

European Patent Office

Office européen des brevets

# EUROPEAN SEARCH REPORT

Application Number

EP 18 21 1603

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | KR 101 525 857 B1 (HALLA VISTEON CLIMATE CONTROL [KR]) 3 June 2015 (2015-06-03)<br>* paragraphs [0006], [0036], [0043], [0048], [0027], [0033]; claims 3,4; figures 3-7 * | 1-4,7-9<br><br>5,6 | INV.<br>F25B41/06<br>F25B41/00 |
| X<br>A | JP 2008 050989 A (DENSO CORP)<br>6 March 2008 (2008-03-06)<br>* paragraphs [0045] - [0048]; figures 1,7-9 * | 1,2,4,<br>7-9<br>5,6 | |
| A,D | JP H07 146032 A (MATSUSHITA SEIKO KK)<br>6 June 1995 (1995-06-06)<br>* abstract; figures * | 1-9 | |
| A,D | JP 2012 154529 A (MITSUBISHI ELECTRIC CORP) 16 August 2012 (2012-08-16)<br>* abstract; figures * | 1-9 | |
| A | KR 101 578 826 B1 (PARK SANG HO [KR])<br>23 December 2015 (2015-12-23)<br>* figures * | 1-9 | |

TECHNICAL FIELDS SEARCHED (IPC)

F25B
B60H

The present search report has been drawn up for all claims

| Place of search | Date of completion of the search | Examiner |
|---|---|---|
| Munich | 4 April 2019 | Ritter, Christoph |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 21 1603

This annex lists the patent family members relating to the patent documents cited in the above-mentioned European search report.
The members are as contained in the European Patent Office EDP file on
The European Patent Office is in no way liable for these particulars which are merely given for the purpose of information.

04-04-2019

| Patent document cited in search report | | Publication date | Patent family member(s) | | Publication date |
|---|---|---|---|---|---|
| KR 101525857 | B1 | 03-06-2015 | NONE | | |
| JP 2008050989 | A | 06-03-2008 | NONE | | |
| JP H07146032 | A | 06-06-1995 | NONE | | |
| JP 2012154529 | A | 16-08-2012 | JP<br>JP | 5535098 B2<br>2012154529 A | 02-07-2014<br>16-08-2012 |
| KR 101578826 | B1 | 23-12-2015 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H7146032 A
- JP 2012154529 A